(19) Europäisches Patentamt
European Patent Office
Office européen des brevets

(11) **EP 4 385 963 A1**

(12) **EUROPÄISCHE PATENTANMELDUNG**

(43) Veröffentlichungstag:
**19.06.2024 Patentblatt 2024/25**

(21) Anmeldenummer: **23213378.5**

(22) Anmeldetag: **30.11.2023**

(51) Internationale Patentklassifikation (IPC):
*C04B 26/26* (2006.01)  *C04B 40/06* (2006.01)
*C04B 14/28* (2006.01)  *C04B 24/02* (2006.01)
*C04B 24/08* (2006.01)  *C04B 24/04* (2006.01)
*C04B 18/167* (2023.01)  *C04B 111/00* (2006.01)

(52) Gemeinsame Patentklassifikation (CPC):
(C-Sets verfügbar)
**C04B 26/26; C04B 2111/0075**  (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **02.12.2022 AT 509182022**

(71) Anmelder: **Österreichische Vialit- Gesellschaft
m.b.H.**
**5280 Braunau am Inn (AT)**

(72) Erfinder: **Bruckbauer, Alexander
5280 BRAUNAU AM INN/ DIETFURT (AT)**

(74) Vertreter: **Puchberger & Partner Patentanwälte
Reichsratsstraße 13
1010 Wien (AT)**

(54) **VERFAHREN ZUR HERSTELLUNG EINES KALTASPHALTMISCHGUTES**

(57) Die Erfindung betrifft ein Verfahren zur Herstellung eines Kaltasphaltmischgutes, wobei Recyclingasphaltgranulat, ein Bitumen-lösendes Mischgut-Additiv und Gesteinsgranulat vermischt und auf eine Aktivierungstemperatur gebracht werden, wobei die Aktivierungstemperatur mehr als 30°C, insbesondere zwischen 90°C und 110°C, beträgt, und wobei das Mischgut-Additiv ein Gemisch aus einer Fettsäure-Komponente und einer Alkohol-Komponente ist. Die Erfindung betrifft ferner ein Kaltasphaltmischgut sowie eine Verwendung.

EP 4 385 963 A1

(52) Gemeinsame Patentklassifikation (CPC): (Forts.)

C-Sets
**C04B 26/26, C04B 40/0028, C04B 40/065,
C04B 40/0082, C04B 14/28, C04B 20/0076,
C04B 24/02, C04B 24/08, C04B 24/045,
C04B 18/167**

**Beschreibung**

Die vorliegende Erfindung betrifft ein Verfahren zur Herstellung eines Kaltasphaltmischgutes, ein Kaltasphaltmischgut sowie die Verwendung eines Bitumen-lösenden Mischgut-Additivs.

Als Kaltmischgut wird im Stand der Technik ein kalt einbaufähiges Asphaltmischgut bezeichnet, das im Wesentlichen aus Mineral und bituminösem Bindemittel besteht. Es kann zwischen ein- und mehrkomponentigen Mischgütern unterschieden werden. Bei Letzteren wird entweder Bindemittel in Form einer Bitumenemulsion und Mineral getrennt voneinander gelagert und erst bei Anwendung zusammengeführt. Alternativ wird ein vorgemischtes und lagerfähiges Kaltmischgut verwendet, dessen Festigkeitsanstieg innerhalb weniger Minuten durch Einrühren von Wasser erfolgt.

Beide Mischgutarten ergeben binnen kurzer Zeit (max. 60 min) eine verkehrsfeste Asphaltschicht. Die eingesetzten Bindemittel sind bituminös und enthalten keine flüchtigen organischen Substanzen (auch als VOCs - *volatile organic compounds* - bezeichnet) auf Basis niedrig siedender Kohlenwasserstoffe.

Ein im Vergleich dazu deutlich langsamerer Festigkeitsanstieg wird bei Anwendung eines lösemittelhaltigen Fertigproduktes beobachtet. Die Festigkeitsentwicklung basiert auf der Verflüchtigung der Lösemittel und geht einher mit dem Entweichen dieser Substanzen in die Umwelt. Höhere Schichtstärken beim Einbau ergeben eine Verzögerung der Durchhärtung von bis zu 72 Stunden.

Ferner sind im Stand der Technik Fertigmischgüter bekannt, deren Bindemittel entweder mit einem mineralisch-stämmigen oder mit einem vegetabilen Fluxöl vermischt ist. Das Fluxmittel verbleibt dabei dauerhaft im Mischgut und ermöglicht somit ein lagerfähiges Fertigprodukt. Jedoch hat dessen weichmachende Wirkung einen entscheidenden Qualitätseinfluss während der Anwendung, denn die Festigkeitsentwicklung ist weder mit den mehrkomponentigen noch mit den lösemittelhaltigen Produkten vergleichbar. Das Mischgut wird daher nur auf wenig oder nicht befahrenen Straßen oder Wege angewendet.

Die Herstellung derartiger angefluxter Asphaltmischgüter erfolgt in einer Heißasphaltmischanlage. Dabei wird das Gestein auf ca. 100°C erwärmt und mit dem Bindemittel vermischt. Sowohl das petrostämmige Fluxöl in Form eines hoch siedenden Kohlenwasserstoffgemisches, als auch ein natürlich vorkommendes Öl in Form eines Esters sind in der Lage das Bitumen nachhaltig zu erweichen. Beide Bindemittelarten können entweder in emulgierter Form oder als Fluxbitumen angewendet werden.

Fluxbitumen muss auf wenigstens 60°C erwärmt werden, um es in der erforderlichen Menge dosieren zu können. Die Verarbeitung fluxölhaltiger Bitumenemulsionen ist in der Regel ab einer Temperatur von 10°C möglich.

Zusammenfassend können folgende Nachteile der im Stand der Technik bekannten Mischgüter festgehalten werden:

- Bindemittelzugabe aus fossilen Rohstoffen wie Bitumen und Fluxölen
- Fluxöle bleiben als Dauerweichmacher über einen sehr langen Zeitraum erhalten, dadurch eingeschränkter Einsatz
- frisch verlegtes Kaltmischgut hält einer geringen Scherbeanspruchung nicht statt
- das Mineral besteht aus Monokorn, da bei Kornabstufung kein lagerfähiges und bei Temperaturen <10 °C einbaubares Mischgut erzeugt werden kann

Eine Aufgabe der vorliegenden Erfindung kann nun darin gesehen werden, zumindest einen der Nachteile des Standes der Technik zu überwinden. Insbesondere kann eine Aufgabe der Erfindung darin gesehen werden, ein Mischgut zu schaffen, das kalt einbaubar und umweltfreundlich ist sowie eine rasche Verfestigung aufweist.

Die Erfindung betrifft insbesondere ein Verfahren zur Herstellung eines lagerfähigen Asphaltmischgutes, welches ganzjährig zur dauerhaften Reparatur von Asphalt- und Betonstraßen angewendet werden kann.

Im erfindungsgemäßen Verfahren können zumindest drei Komponenten miteinander vermischt werden, nämlich Recyclingasphaltgranulat, Gesteinsgranulat / Mineral und flüssiges Mischgut-Additiv. Bei dem Recyclingasphaltgranulat kann es sich insbesondere um aufbereiteten und klassierten Recyclingasphalt handelt. Das Gesteinsgranulat kann korngrößenabgestuft sein. Das Mischgut-Additiv kann vollständig aus nachwachsenden Rohstoffen erhalten sein.

Das Mischgut-Additiv kann die Fähigkeit aufweisen, Bitumen zumindest teilweise zu lösen. Dabei enthält das Mischgut-Additiv gegebenenfalls zumindest eine Fettsäure-Komponente und eine Alkohol-Komponente. Im Rahmen der vorliegenden Erfindung wurde überraschend festgestellt, dass diese Komponentenkombination besonders vorteilhafte Wirkungen hervorruft. Ohne an diese Theorie gebunden zu sein wird angenommen, dass die Alkohol-Komponente das Lösen des im Recyclingasphaltgranulat enthaltenen Bitumens bewirkt und die Fettsäure-Komponente zu einer verbesserten Benetzung des Gesteinsgranulats mit der gebildeten Bitumen-Lösung führt.

Es wurde ferner festgestellt, dass ein derartiges Mischgut-Additiv gegebenenfalls vollständig aus biologischen Quellen gewonnen werden kann.

Die Fettsäure-Komponente kann eine Fettsäure oder ein Fettsäurederivat oder eine Mischung aus einer oder mehreren Fettsäuren mit einem oder mehreren Fettsäurederivaten sein. Die Bezeichnung Fettsäure steht insbesondere für eine aliphatische Monocarbonsäure, die gesättigt oder ungesättigt sein kann. Eine Fettsäure kann eine durchgehende Kohlenstoffkette von zumindest 4 Kohlenstoffatomen, insbesondere von zumindest 8 Kohlenstoffatomen, aufweisen.

Ein Fettsäurederivat kann beispielsweise ein Salz, insbesondere ein Natrium- oder ein Kaliumsalz, einer Fettsäure sein.

Die Alkohol-Komponente kann ein Alkohol oder ein Alkoholderivat oder eine Mischung aus einem oder mehreren Alkoholen mit einem oder mehreren Alkoholderivaten ist. Ein Alkohol ist insbesondere ein Mitglied der chemischen Familie der Alkohole. Ein Alkohol weist in der Regel eine Hydroxyl-Funktionalität (-OH) auf, die an Kohlenstoff gebunden ist. An diesen Kohlenstoff ist außer der Hydroxyl-Funktionalität nur Kohlenstoff- oder Wasserstoff gebunden. Alkohole können eine oder mehrere Hydroxyl-Funktionalitäten auf unterschiedlichen Kohlenstoff-Atomen tragen.

Ein Alkoholderivat kann beispielsweise ein Alkoholat sein, bei dem das WasserstoffAtom der Hydroxyl-Funktionalität durch ein Metall-Kation, insbesondere ein Natrium- oder ein Kalium-Kation, substituiert ist.

In einer bevorzugten Ausführungsform besteht das Mischgut-Additiv vorwiegend aus Fettsäuregemischen denen biobasierende Alkohole, auch mehrwertigen Ursprungs, beigemengt sind. Es können auch Spuren von Estern und Derivate von Alkoholen enthalten sein.

In dem erfindungsgemäßen Verfahren kann das Recyclingasphaltgranulat mit Umgebungstemperatur, also beispielsweise zwischen 10°C und 30°C, vorgelegt werden und mit dem Mischgut-Additiv vermischt werden. Dies kann beispielsweise in einer Mischtrommel oder einer anderen geeigneten Mischvorrichtung erfolgen. Das Mischgut-Additiv bewirkt insbesondere bereits bei Umgebungstemperatur ein Anlösen des Bitumens, ein verbessertes Lösen wird gegebenenfalls erst bei einer Aktivierungstemperatur erreicht, die über der Umgebungstemperatur liegt. Die Mischung aus Bitumen aus dem Recyclingasphaltgranulat und dem Mischgut-Additiv kann beispielsweise als Bindemittel, Bindemittelgemenge oder Gesamt-Bindemittel bezeichnet werden.

In einem weiteren Schritt kann der Mischung aus Recyclingasphaltgranulat und Mischgut-Additiv Gesteinsgranulat zugemischt werden. Das zugegebene Gesteinsgranulat ist bevorzugt vorerwärmt, sodass die Temperatur der gesamten Mischung angehoben wird. Insbesondere ist die Temperatur des zugegebenen Gesteinsgranulats so gewählt, dass die Temperatur der gesamten Mischung die gewünschte Aktivierungstemperatur aufweist, ohne diese weiter erwärmen zu müssen. Um dies zu erreichen, kann das Gesteinsgranulat vor der Zugabe zu den weiteren Komponenten bzw. vor dem Vermischen eine entsprechend gewählte Temperatur aufweisen.

In einer alternativen Ausführung kann die Erwärmung der Mischung auch durch externen Wärmeeintrag nach Vermischen der Komponenten erfolgen.

Die Aktivierungstemperatur liegt insbesondere bei wenigstens 30°C, wobei eine Temperatur von etwa 100°C, beispielsweise zwischen 80°C und 120°C oder zwischen 90°C und 110°C, bevorzugt ist. Bei dieser Aktivierungstemperatur kann ein vollständiges Lösen des Bitumens erfolgen. Eine Unter- oder Überschreitung der Aktivierungstemperatur kann sich gegebenenfalls negativ auf die Lagerstabilität des Mischgutes und dessen Festigkeitszunahme nach der Verdichtung auswirken.

Im Rahmen der vorliegenden Erfindung wurde festgestellt, dass die Verwendung des Mischgut-Additivs und die Anwendung des speziellen Temperaturregimes die Herstellung eines matten, jedoch ab 0°C klebrigen Bindemittelfilms erlaubt. Dies hat den Vorteil, dass der Bindemittelfilm am Gesteinsgranulat haften bleibt und nicht von überfahrenden Reifen mitgenommen und verteilt wird. Des Weiteren wird das Mischgut durch Befahren derart verdichtet, dass schon nach wenigen Überrollungen eine feste Asphaltschicht entsteht. Diese Schicht ist bereits nach wenigen Stunden und mittlerem Verkehrsaufkommen mechanisch stark beanspruchbar.

Der durch Anwendung der vorliegenden Erfindung erhaltene Bindemittelfilm enthält das Bitumen aus dem Recyclingasphaltgranulat sowie das Mischgut-Additiv.

Durch das erfindungsgemäße Verfahren wird insbesondere eine neue Form der Kaltklebrigkeit von Kaltasphalt bereitgestellt, die durch im Stand der Technik bekannte Verfahren nicht erreicht werden kann. Insbesondere die Kombination aus Recyclingasphaltgranulat und Gesteinsgranulat bildet eine vorteilhafte Ausgestaltung der Erfindung - bei ausschließlichem Einsatz von Recyclingasphalt, wäre der Bindemitteleintrag derart hoch, dass die resultierenden Kennwerte keine lagerfähige Kaltmischgutqualität ergeben würden.

Besonders hervorzuheben ist auch die Verwendung von kornabgestuftem Gesteinsgranulat. Dies steht im Gegensatz zum Stand der Technik, wo es beispielsweise bei gefluxten Kaltmischgütern üblich ist, dass Monokornmischungen mit Über- und Unterkorn verwendet werden, da bei Überschreiten eines Füllergehaltes (<0,063 mm) von 3 Gew.-% keine ausreichende Lagerfähigkeit mehr gegeben ist.

Gegebenenfalls ist vorgesehen, dass die Mischtemperatur-Kennzahl MT in der Gleichung 1 zwischen 90°C und 110°C, insbesondere zwischen 95°C und 105°C, liegt.

$$MT = \frac{c_{RA} * m_{RA} * T_{RA} + c_B * m_B * T_B + c_G * m_G * T_G}{(c_{RA} * m_{RA} + c_B * m_B + c_G * m_G)} \qquad \ldots \text{Gleichung 1}$$

In Gleichung 1 steht $c_{RA}$ für die spezifische Wärmekapazität des Recyclingasphaltgranulats, $m_{RA}$, für das Gewicht des Recyclingasphaltgranulats, $T_{RA}$ für die Temperatur des Recyclingasphaltgranulats vor dem Vermischen ist. Ferner steht es für die spezifische Wärmekapazität des Mischgut-Additivs, $m_B$ für das Gewicht des Mischgut-Additivs, $T_B$ für die Temperatur des Mischgut-Additivs vor dem Vermischen, und $c_G$ für die spezifische Wärmekapazität des Gesteinsgranulats, mc für das Gewicht des Gesteinsgranulats, $T_G$ für die Temperatur des Gesteinsgranulats vor dem Vermischen.

"Vor dem Vermischen" bezeichnet in diesem Zusammenhang insbesondere den Zeitpunkt der Zugabe der jeweiligen Komponente zu der Mischung.

Gleichung 1 ist insbesondere relevant, wenn das Mischgut durch Zugabe von erwärmtem Gesteinsgranulat auf die Aktivierungstemperatur gebracht wird. Dies kann beispielsweise in einer Standardmischanlage erfolgen, wenn das Recyclingasphaltgranulat bei Umgebungstemperatur ("kalt") mittels Bypass zugegeben wird. Zur Herstellung des Mischgutes können auch Paralleltrommeln und Trommeln mit Mittenringaufgabe verwendet werden.

Erfolgt die Produktion in keiner Standardmischanlage, werden Recyclingasphaltgranulat, Gesteinsgranulat und Mischgut-Additiv gemeinsam auf die Aktivierungstemperatur erwärmt um die Aktivierungstemperatur bzw. die Mischtemperatur-Kennzahl MT zu erreichen.

Gegebenenfalls beträgt der Anteil an Recyclingasphalt im Asphaltmischgut wenigstens 10 Gew.-%, insbesondere wenigstens 25 Gew.-%, bezogen auf die Gesamtmenge des Asphaltmischgutes.

Gegebenenfalls ist das Recyclingasphaltgranulat aufbereiteter und klassierter Recyclingasphalt in einem Korngrößenbereich zwischen 0 mm und 32 mm. Gegebenenfalls ist das Gesteinsgranulat korngrößenabgestuftes Gesteinsgranulat in einem Korngrößenbereich zwischen 0 mm und 32 mm ist.

Insbesondere ist das Recyclingasphaltgranulat aufbereiteter und klassierter Recyclingasphalt mit einer Körnung zwischen 0/5 und 0/8 ist. Der Korngrößenbereich liegt also zwischen 0 bis 5 mm und 0 bis 8 mm.

Insbesondere ist das Gesteinsgranulat korngrößenabgestuftes Gesteinsgranulat mit einer Körnung zwischen 2/5 und 4/8 ist. Der Korngrößenbereich liegt also zwischen 2 bis 5 mm und 4 bis 8 mm.

Gegebenenfalls beträgt der Anteil an Bindemittel, also dem Gemisch aus dem Mischgut-Additiv und Bitumen aus dem Recyclingasphalt, im Asphaltmischgut zwischen 1,0 Gew.-% und 10 Gew.-%, insbesondere zwischen 2,0 Gew.-% und 7,0 Gew.-%, bezogen auf die Gesamtmenge des Asphaltmischgutes.

Das Mischgut-Additiv ist bei Raumtemperatur, also insbesondere bei 25°C, gegebenenfalls flüssig.

Im erfindungsgemäßen Mischgut-Additiv können eine oder mehrere der folgenden Komponenten enthalten sein:

- Fettsäure-Komponente in einem Gehalt zwischen 50 Gew.-% und 90 Gew.-%, insbesondere zwischen 60 Gew.-% und 80 Gew.-%,
- Alkohol-Komponente in einem Gehalt zwischen 1,0 und 20 Gew.-%,
- eine oder mehrere tricyclische Diterpen-Carbonsäuren, beispielsweise Abietin und/oder Pimarsäure, in einem Anteil zwischen 1,0 Gew.-% und 30 Gew.-%,
- ferner einen oder mehrere natürliche Ester in einem Anteil zwischen 0,1 Gew.-% und 10 Gew.-%.

Gegebenenfalls betrifft die Erfindung auch ein Kaltasphaltmischgut, das Recyclingasphaltgranulat, ein Bitumen-lösendes Mischgut-Additiv und Gesteinsgranulat enthält. Das Kaltasphaltmischgut kann eines oder mehrere Merkmale aufweisen, die in Zusammenhang mit dem erfindungsgemäßen Verfahren beschrieben sind.

Das Kaltasphaltmischgut enthält insbesondere ein Mischgut-Additiv, das ein Gemisch aus einer Fettsäure-Komponente und einer Alkohol-Komponente ist.

Die Erfindung betrifft gegebenenfalls ferner die Verwendung eines Bitumen-lösenden Mischgut-Additivs, das ein Gemisch aus einer Fettsäure-Komponente und einer Alkohol-Komponente ist, zur Herstellung eines Asphaltmischgutes, das Recyclingasphaltgranulat, das Mischgut-Additiv und Gesteinsgranulat enthält.

Die Verwendung kann eines oder mehrere Merkmale aufweisen, die in Zusammenhang mit dem erfindungsgemäßen Verfahren beschrieben sind.

Spezielle weitere Vorteile, die sich aus dem erfindungsgemäßen Verfahren bzw. aus bevorzugten Merkmalen ergeben, sind beispielhaft in der folgenden Liste aufgeführt:

- Das zugesetzte Mischgut-Additiv ist frei von fossilen Rohstoffen.
- Das vorliegende Verfahren verwendet ein Mischgut-Additiv, welches weder für den Menschen noch für Tiere genießbar ist, insbesondere handelt es sich um ungenießbare Abscheideprodukte der natürlichen Ölproduktion (Speise- / Bioöl o.ä.).
- Kornabgestuftes Asphaltmischgut, das mit dem erfindungsgemäßen Verfahren erhalten werden kann, wird nach entsprechender Verdichtung innerhalb einer Stunde verkehrsfest.
- Im Gegensatz zum Stand der Technik kann die Verarbeitbarkeit und Lagerfähigkeit über Bindemittelgehalt, Temperaturkennzahl MT und Gehalt an Recyclingasphalt gezielt eingestellt werden.

- Es wird ausschließlich Bitumen genutzt, welches bereits im Recyclingasphaltgranulat enthalten ist.
- Es werden weder Polymere fossilen noch natürlichen Ursprungs verwendet.

Weitere Merkmale der Erfindung ergeben sich aus den Patentansprüchen und der nachfolgenden Beschreibung der Ausführungsbeispiele. Es wird angemerkt, dass die Ausführungsbeispiele lediglich der Illustration bevorzugter erfindungsgemäßer Merkmale dienen sollen und den Schutzbereich der Patentansprüche nicht einschränken.

Beispiel 1

In diesem Beispiel wurden zwei Mischgüter unter Verwendung eines erfindungsgemäßen Verfahrens hergestellt. Mischgut 1 bezeichnet ein Mischgut in Sommerqualität, während Mischgut 2 ein Mischgut in Winterqualität bezeichnet. Der Unterschied zwischen Mischgut 1 und Mischgut 2 besteht in der Zusammensetzung der Mischgüter, die zu unterschiedlichen Verarbeitungseigenschaften führt. Das Mischgut 2 ist im Vergleich zu Mischgut 1 bei Temperaturen von unter 10°C wesentlich weicher, sodass sich das Mischgut 2 mit weniger Kraftaufwand verarbeiten und verdichten lässt. Der Anteil an Recyclingasphaltgranulat in Mischgut 1 ist höher als in Mischgut 2.

In dem erfindungsgemäßen Verfahren gemäß Beispiel 1 wurde ein Mischgut-Additiv verwendet, das ein ungenießbares Abscheideprodukt der Speiseölherstellung ist. Das Mischgut-Additiv enthält etwa 70 Gew.-% an Fettsäuren, wie Palmitinsäure, Palmitolsäure, Stearinsäure, Ölsäure, Linol- und Linolensäure, als Fettsäure-Komponente sowie etwa 6 Gew.-% an Alkoholen. Der Rest wird aus Abietin- und Pimarsäure sowie natürlichen Estern gebildet.

Als Recyclingasphaltgranulat wurde gebrochene und abgesiebte Asphaltgranulat aus Aufbruchsasphalt verwendet. Als Gesteinsgranulat wurde kornabgestuftes Kalkgestein in einem Korngrößenbereich zwischen 2 und 5 mm verwendet.

Bei der Durchführung des erfindungsgemäßen Verfahrens wurden 390 kg des Recyclingasphaltgranulats mit einer Temperatur von etwa 27°C und 25 kg Mischgut-Additiv mit einer Temperatur von etwa 25°C bereitgestellt und homogen vermischt. Dieser Mischung wurden 585 kg an vorerwärmtem Gesteinsgranulat mit einer Temperatur von etwa 140°C zugegeben.

Das erhaltene Mischgut wies nach dem Vermischen eine Temperatur von etwa 100°C auf. Mit einer spezifischen Wärmekapazität des Recyclingasphaltgranulats $c_{RA}$ = 720 J/kg.K, einer spezifischen Wärmekapazität des Gesteinsgranulats $c_G$ = 1000 J/kg.K und einer spezifischen Wärmekapazität des Mischgut-Additivs es = 1675 J/kg.K betrug die Mischtemperatur-Kennzahl MT gemäß der oben genannten Gleichung 1 etwa 99,74.

Das so erhaltene Mischgut wurde auf Umgebungstemperatur abgekühlt und war für die weitere Verarbeitung bereit.

Beispiel 2 (vergleichend, nicht erfindungsgemäß)

In diesem Beispiel wurden zwei Mischgüter unter Verwendung eines nicht erfindungsgemäßen Verfahrens aus vegetabilem Fluxbitumen hergestellt. Mischgut 3 bezeichnet ein Mischgut in Sommerqualität, während Mischgut 4 ein Mischgut in Winterqualität bezeichnet. Die Unterschiede zwischen Sommer- und Winterqualität sind wie in Beispiel 1 beschrieben.

Die Herstellung der Mischgüter 3 und 4 erfolgte ebenfalls auf einer Heißmischanlage, wobei ausschließlich Gesteinsmischungen mit Fluxbitumen gemischt wurden. Dies erfolgte bei einer Mischtemperatur von etwa 80-90 °C. Die Weichheit des Kaltmischgutes kann über die Höhe des Fluxölgehaltes eingestellt werden, wobei mehr Fluxöl und weniger Bitumen zu weicherem Mischgut führt, das von darüber rollendem Verkehr auch schneller wieder aus einer Schadstelle herausgefahren wird.

Beispiel 3

In Beispiel 3 wurden die Mischguteigenschaften der in den Beispielen 1 und 2 hergestellten Mischgüter überprüft. Die Prüfversuche wurden jeweils in drei Replikaten durchgeführt.

| | Beispiel 1 (erfindungsgemäß) | | Beispiel 2 (nicht erfindungsgemäß) | |
| --- | --- | --- | --- | --- |
| | *Mischgut 1* | *Mischgut 2* | *Mischgut 3* | *Mischgut 4* |
| Rieselzeit bei 0°C[1] | 50-100 | 50-100 | >1000 | >500 |
| Marshall-Stabilität (kN)[3] | 4,92/4,97/5,59 | 3,44/4,74/5,14 | (2) | (2) |

(fortgesetzt)

| | Beispiel 1 (erfindungsgemäß) | | Beispiel 2 (nicht erfindungsgemäß) | |
| --- | --- | --- | --- | --- |
| | *Mischgut 1* | *Mischgut 2* | *Mischgut 3* | *Mischgut 4* |
| Fließwert[3] | 2,23/1,87/1,79 | 1,7/1,68/1,66 | (2) | (2) |
| Marshall-Festigkeit (kN/mm)[3] | 2,23/1,87/1,79 | 1,7/1,66/1,68 | (2) | (2) |
| Bindemittelgehalt (%) | 5,7 | 5,7 | 5,5 | 5,5 |
| [1] bestimmt gemäß RVS 08.97.01<br>[2] keine Bestimmung möglich, da beim Entformen zerfallen<br>[3] bestimmt an Marshall-Probekörpern bei 25°C gem. ÖNORM EN 12697-34 | | | | |

Es zeigt sich, dass die erfindungsgemäßen Mischgüter im Vergleich zu den nich erfindungsgemäßen Mischgütern bei einer Temperatur von 0°C eine wesentlich geringere Rieselzeit aufweisen, was vorteilhafte Eigenschaften bei der Verarbeitung belegt. Überdies konnten mit den nicht erfindungsgemäßen Mischgütern keine stabilen Marshall-Probekörper erhalten werden, was die fehlende Eignung dieser Mischgüter für die Bildung belastbarer Asphaltflächen zeigt.

## Patentansprüche

1. **Verfahren** zur Herstellung eines Kaltasphaltmischgutes, wobei Recyclingasphaltgranulat, ein Bitumen-lösendes Mischgut-Additiv und Gesteinsgranulat vermischt und auf eine Aktivierungstemperatur gebracht werden, **dadurch gekennzeichnet, dass** die Aktivierungstemperatur mehr als 30°C, insbesondere zwischen 90°C und 110°C, beträgt, und dass das Mischgut-Additiv ein Gemisch aus einer Fettsäure-Komponente und einer Alkohol-Komponente ist,

   - wobei die Fettsäure-Komponente eine Fettsäure oder ein Fettsäurederivat oder eine Mischung aus einer oder mehreren Fettsäuren mit einem oder mehreren Fettsäurederivaten ist, und
   - wobei die Alkohol-Komponente ein Alkohol oder ein Alkoholderivat oder eine Mischung aus einem oder mehreren Alkoholen mit einem oder mehreren Alkoholderivaten ist.

2. Verfahren nach Anspruch 1, **dadurch gekennzeichnet, dass** das Recyclingasphaltgranulat aufbereiteter und klassierter Recyclingasphalt in einem Korngrößenbereich zwischen 0 mm und 32 mm ist, und/oder dass das Gesteinsgranulat korngrößenabgestuftes Gesteinsgranulat in einem Korngrößenbereich zwischen 0 mm und 32 mm ist.

3. Verfahren nach Anspruch 1 oder 2, **dadurch gekennzeichnet, dass** das Recyclingasphaltgranulat aufbereiteter und klassierter Recyclingasphalt mit einer Körnung zwischen 0/5 und 0/8 ist, und/oder dass das Gesteinsgranulat korngrößenabgestuftes Gesteinsgranulat mit einer Körnung zwischen 2/5 und 4/8 ist.

4. Verfahren nach einem der Ansprüche 1 bis 3, **dadurch gekennzeichnet, dass** das Recyclingasphaltgranulat, das Mischgut-Additiv sowie das Gesteinsgranulat jeweils mit einer Temperatur von unter 30°C bereitgestellt, vermischt und nach dem Vermischen zusammen auf die Aktivierungstemperatur erwärmt werden.

5. Verfahren nach einem der Ansprüche 1 bis 3, **dadurch gekennzeichnet, dass** das Recyclingasphaltgranulat und das Mischgut-Additiv jeweils mit einer Temperatur von unter 30°C bereitgestellt und mit erwärmtem Gesteinsgranulat vermischt werden, um die Aktivierungstemperatur zu erreichen.

6. Verfahren nach Anspruch 5, **dadurch gekennzeichnet, dass** die Mischtemperatur-Kennzahl MT in der folgenden Gleichung 1 zwischen 90°C und 110°C, insbesondere zwischen 95°C und 105°C, liegt:

$$\mathrm{MT} = \frac{c_{RA} * m_{RA} * T_{RA} + c_B * m_B * T_B + c_G * m_G * T_G}{(c_{RA} * m_{RA} + c_B * m_B + c_G * m_G)} \qquad \ldots \text{Gleichung 1}$$

wobei $c_{RA}$ die spezifische Wärmekapazität des Recyclingasphaltgranulats ist, $m_{RA}$ das Gewicht des Recyclingasphaltgranulats ist, $T_{RA}$ die Temperatur des Recyclingasphaltgranulats vor dem Vermischen ist, wobei es die spezifische Wärmekapazität des Mischgut-Additivs ist, $m_B$ das Gewicht des Mischgut-Additivs ist, $T_B$ die Temperatur des Mischgut-Additivs vor dem Vermischen ist, und wobei $c_G$ die spezifische Wärmekapazität des Gesteinsgranulats ist, mc das Gewicht des Gesteinsgranulats ist, $T_G$ die Temperatur des Gesteinsgranulats vor dem Vermischen ist.

7. Verfahren nach einem der Ansprüche 1 bis 6, **dadurch gekennzeichnet, dass** der Anteil an Recyclingasphalt im Asphaltmischgut wenigstens 10 Gew.-%, insbesondere wenigstens 25 Gew.-%, bezogen auf die Gesamtmenge des Asphaltmischgutes beträgt.

8. Verfahren nach einem der Ansprüche 1 bis 7, **dadurch gekennzeichnet, dass** der Anteil an Bindemittel, also dem Gemisch aus dem Mischgut-Additiv und Bitumen aus dem Recyclingasphalt, im Asphaltmischgut zwischen 1,0 Gew.-% und 10 Gew.-%, insbesondere zwischen 2,0 Gew.-% und 7,0 Gew.-%, bezogen auf die Gesamtmenge des Asphaltmischgutes beträgt.

9. Verfahren nach einem der Ansprüche 1 bis 8, **dadurch gekennzeichnet, dass** das Mischgut-Additiv bei Raumtemperatur flüssig ist.

10. Verfahren nach einem der Ansprüche 1 bis 9, **dadurch gekennzeichnet, dass** das Mischgut-Additiv vollständig aus nachwachsenden Rohstoffen hergestellt ist.

11. Verfahren nach einem der Ansprüche 1 bis 10, **dadurch gekennzeichnet, dass** das Mischgut-Additiv zwischen 50 Gew.-% und 90 Gew.-%, insbesondere zwischen 60 Gew.-% und 80 Gew.-%, der Fettsäure-Komponente enthält, und/oder zwischen 1,0 und 20 Gew.-% der Alkohol-Komponente enthält.

12. Verfahren nach einem der Ansprüche 1 bis 11, **dadurch gekennzeichnet, dass** das Mischgut-Additiv ferner eine oder mehrere tricyclische Diterpen-Carbonsäuren, beispielsweise Abietin und/oder Pimarsäure, in einem Anteil zwischen 1,0 Gew.-% und 30 Gew.-% enthält.

13. Verfahren nach einem der Ansprüche 1 bis 12, **dadurch gekennzeichnet, dass** das Mischgut-Additiv ferner einen oder mehrere natürliche Ester in einem Anteil zwischen 0,1 Gew.-% und 10 Gew.-% enthält.

14. **Kaltasphaltmischgut** umfassend Recyclingasphaltgranulat, ein Bitumen-lösendes Mischgut-Additiv und Gesteinsgranulat, **dadurch gekennzeichnet, dass** das Mischgut-Additiv ein Gemisch aus einer Fettsäure-Komponente und einer Alkohol-Komponente ist,

   - wobei die Fettsäure-Komponente eine Fettsäure oder ein Fettsäurederivat oder eine Mischung aus einer oder mehreren Fettsäuren mit einem oder mehreren Fettsäurederivaten ist, und
   - wobei die Alkohol-Komponente ein Alkohol oder ein Alkoholderivat oder eine Mischung aus einem oder mehreren Alkoholen mit einem oder mehreren Alkoholderivaten ist.

15. **Verwendung** eines Bitumen-lösenden Mischgut-Additivs, das ein Gemisch aus einer Fettsäure-Komponente und einer Alkohol-Komponente ist,

   - wobei die Fettsäure-Komponente eine Fettsäure oder ein Fettsäurederivat oder eine Mischung aus einer oder mehreren Fettsäuren mit einem oder mehreren Fettsäurederivaten ist, und
   - wobei die Alkohol-Komponente ein Alkohol oder ein Alkoholderivat oder eine Mischung aus einem oder mehreren Alkoholen mit einem oder mehreren Alkoholderivaten ist,

   zur Herstellung eines Kaltasphaltmischgutes, das Recyclingasphaltgranulat, das Mischgut-Additiv und Gesteinsgranulat umfasst.

Europäisches Patentamt
European Patent Office
Office européen des brevets

## EUROPÄISCHER RECHERCHENBERICHT

**Nummer der Anmeldung**

**EP 23 21 3378**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/215919 A1 (REINKE GERALD H [US] ET AL) 2. August 2018 (2018-08-02) * Absatz [0001] – Absatz [0100] * ----- | 1-15 | INV. C04B26/26 C04B40/06 C04B14/28 |
| X | EP 3 404 143 A1 (OESTERREICHISCHE VIALIT GMBH [AT]) 21. November 2018 (2018-11-21) * Absatz [0001] – Absatz [0039] * ----- | 14,15 | C04B24/02 C04B24/08 C04B24/04 C04B18/167 |
| A | AT 406 375 B (VIALIT GMBH OESTERR [AT]) 25. April 2000 (2000-04-25) * das ganze Dokument * ----- | 1-15 | C04B111/00 |
| A | CN 111 423 157 A (UNIV HUNAN) 17. Juli 2020 (2020-07-17) * das ganze Dokument * ----- | 1-15 | |

**RECHERCHIERTE SACHGEBIETE (IPC)**

**C04B**

Der vorliegende Recherchenbericht wurde für alle Patentansprüche erstellt

| Recherchenort | Abschlußdatum der Recherche | Prüfer |
|---|---|---|
| **München** | **30. April 2024** | **Kresoja, Radoje** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 3378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2024

| Im Recherchenbericht angeführtes Patentdokument | Datum der Veröffentlichung | Mitglied(er) der Patentfamilie | Datum der Veröffentlichung |
|---|---|---|---|
| US 2018215919 A1 | 02-08-2018 | AU 2018215360 A1 | 08-08-2019 |
| | | AU 2023254926 A1 | 16-11-2023 |
| | | CA 3051251 A1 | 09-08-2018 |
| | | CL 2019002166 A1 | 20-03-2020 |
| | | CN 110799597 A | 14-02-2020 |
| | | EP 3577169 A1 | 11-12-2019 |
| | | JP 7206012 B2 | 17-01-2023 |
| | | JP 7469456 B2 | 16-04-2024 |
| | | JP 2020506316 A | 27-02-2020 |
| | | JP 2023030185 A | 07-03-2023 |
| | | MA 47417 A | 21-04-2021 |
| | | PE 20191365 A1 | 01-10-2019 |
| | | US 2018215919 A1 | 02-08-2018 |
| | | US 2023128467 A1 | 27-04-2023 |
| | | WO 2018144731 A1 | 09-08-2018 |
| | | ZA 201904956 B | 31-08-2022 |
| EP 3404143 A1 | 21-11-2018 | AT 519993 A1 | 15-12-2018 |
| | | EP 3404143 A1 | 21-11-2018 |
| | | HU E056807 T2 | 28-03-2022 |
| | | SI 3404143 T1 | 31-01-2022 |
| AT 406375 B | 25-04-2000 | AT 406375 B | 25-04-2000 |
| | | DE 29708419 U1 | 18-09-1997 |
| CN 111423157 A | 17-07-2020 | KEINE | |

EPO FORM P0461

Für nähere Einzelheiten zu diesem Anhang : siehe Amtsblatt des Europäischen Patentamts, Nr.12/82